# EUROPÄISCHE PATENTSCHRIFT

(11) **EP 0 416 539 B1**
(45) Veröffentlichungstag und Bekanntmachung des Hinweises auf die Patenterteilung: **13.04.1994**
(21) Anmeldenummer: 90116977.1
(22) Anmeldetag: 04.09.1990
(51) Int. Cl.: A61G 3/02

(54) **Zustiegsvorrichtung für Kraftfahrzeuge, insbesondere für Omnibusse**
Entrance device for motor vehicles, in particular for buses
Dispositif d'accès pour véhicules automobiles, en particulier pour autobus

(30) Priorität: 08.09.1989 DE 8910746 U
(43) Veröffentlichungstag der Anmeldung: 13.03.1991
(73) Patentinhaber: Karl Kässbohrer Fahrzeugwerke GmbH, D-89077 Ulm (DE)
(72) Erfinder: Feith,Thomas, W-7348 Gruibingen (DE)
(74) Vertreter: Grünecker, Kinkeldey, Stockmair & Schwanhäusser Anwaltssozietät

(56) Entgegenhaltungen:
- EP-A- 0 064 448
- EP-A- 0 217 265
- AT-B- 374 154
- DE-A- 3 123 145
- FR-A- 2 293 334
- US-A- 4 114 944

## Beschreibung

Die vorliegende Erfindung betrifft eine Zustiegsvorrichtung für Kraftfahrzeuge, welche insbesondere für Omnibusse, und speziell für Niederflur-Omnibusse geeignet ist, gemäß dem Oberbegriff des Anspruches 1.

Omnibusse spielen im Reiseverkehr und insbesondere im öffentlichen Nahverkehr eine sehr entscheidende Rolle. Im Bemühen, dieses Verkehrsmittel allen Bürgern zur Verfügung zu stellen, werden seit langem Anstrengungen unternommen, Behinderten, die auf einen Rollstuhl angewiesen sind, eine weitgehend selbständige Benutzung von Omnibussen zu erleichtern.

Eine im Stand der Technik bekannte Zustiegsvorrichtung für Rollstuhlfahrer, die sich besonders für Niederflur-Fahrzeuge eignet, weist eine horizontale Plattform auf, die in der Ruheposition eben mit dem Innenboden des Fahrzeuges abschließt. Über ein spezielles Hubwerk ist die Plattform hydraulisch in vertikaler Richtung absenkbar, so daß ein Rollstuhlfahrer mit dem Rollstuhl auf die Plattform fahren kann. Anschließend wird die Plattform wieder angehoben und der Rollstuhlfahrer kann von der Plattform auf den Fahrzeugboden fahren. Zur Erleichterung des Zutritts weist die Plattform eine ebenfalls horizontale, hydraulisch ausfahrbare Zusatzplattform auf, die zusätzlich zur Plattform ausgefahren wird und die ein kurzes Rampenstück aufweist, das dann auf den Boden umgeklappt werden kann, um dem Rollstuhlfahrer das Befahren der Plattform zu erleichtern. Diese Rampe dient gleichzeitig im nach oben geklappten Zustand als Abrollsicherung, die verhindert, daß der Rollstuhlfahrer während des Hubvorganges von der Plattform rollen kann.

Diese bekannte Zutrittsvorrichtung hat zum einen den Nachteil, daß die Gestaltung des Hubwerkes und der horizontal verfahrbaren Zusatzplattform konstruktiv aufwendig ist. Der Rahmen des Busses muß speziell an die Höhe der Plattform angepaßt werden und das Hubwerk muß so dimensioniert sein, daß das Gesamtgewicht der Plattform und des darauf befindlichen Rollstuhlfahrers zuverlässig getragen wird. Weiterhin erfordert auch die Abrollsicherung einen zusätzlichen konstruktiven Aufwand. Vom Standpunkt der Sicherheit ist es nachteilig, daßh drei Kanten der Plattform während des Hubvorganges an entsprechenden vertikalen Flächen des Busses entlanggleiten. Während dieser Gleitbewegung können Gegenstände zwischen die Plattform und die vertikalen Seitenwände geraten, die ein Verklemmen bewirken und die Sicherheit des Rollstuhlfahrers gefährden.

Eine gemäß der DE 88 15 693 U1 bekannte Zutrittsvorrichtung für Rollstuhlfahrer wird in einem Rahmen unterhalb des Serien-Grundrahmens eines Omnibusses angeordnet und besteht aus einer ausziehbaren Rampe. Die Rampe kann unter dem Fahrzeug hervorgezogen werden und wird dann auf die Straße bzw. den Gehsteig abgesenkt. Diese Konstruktion hat den Nachteil, daß die Rampe verhältnismäßig steil ist, so daß der Rollstuhlfahrer sie kaum ohne zusätzliche Hilfe überwinden kann. Weiterhin ist die Rampe um die Höhe des Busrahmens gegenüber der Antrittsfläche des Omnibusses nach unten versetzt, so daß am Ende der Rampe eine relativ hohe Schwelle zu überwinden ist. Dies ist ebenfalls nur mit fremder Hilfe und mit erheblichem Kaftaufwand möglich.

Aus der DE 86 04 875 U1 ist eine Vorrichtung zur Überwindung von Höhenunterschieden, insbesondere an mit Stufen versehenen Eingängen, bekannt. Eine Rampe ist mit Hilfe eines Schaniers an der Außenseite zum Beispiel eines Fahrzeuges verschwenkbar gelagert. In Bereitschaftsstellung ist diese Rampe in den Fahrzeugeinnenraum geschwenkt. Nachteilig bei dieser Vorrichtung ist, daß der Raumbedarf der Rampe im Innenraum relativ groß ist und der Durchgang im Einstieg verkleinert wird. Außerdem ist die Rampe nur manuell betätigbar und reicht in der aufgeklappten Betriebsstellung sehr weit hinaus über die Fahrzeugaußenkante in den Verkehrsraum.

In der DE 31 23 145 A1 ist ein Personen-Beförderungsfahrzeug beschrieben, bei der einem Behinderten mit Hilfe einer Plattform der Zugang zu einem Fahzeug erleichert werden soll. Die Plattform kann am Chassis gelenkig gelagert sein und dient im verschwenkten Zustand als Auffahrhilfe und im hochgeschwenkten Zustand als Lagefixierteil. Nachteilig bei dieser Plattform ist, daß durch die doppelte Nutzung als Standfläche und als Auffahrhilfe, die Verriegelung und ebenso die Oberfläche der Plattform konstruktiv aufwendig ausgeführt ist. Außerdem muß der Behinderte gleichzeitig beim Auffahren auf die schiefe Plattform, einen Schalter betätigen, um die Plattform anzuheben. Dies wird den meisten Behinderten nicht möglich sein.

Aus der EP-A-0 217 269 ist eine Zustiegsvorrichtung für Eisenbahnfahrzeuge zur Verwendung in Bannhöfen an entsprechenden Bahnsteigen offenbart. Im Bereich einer Tür ist unterhalb des Bodens im Eisenbahnfahrzeug eine herausschiebare Palette gelagert. Zur Überbrückung des Höhenunterschieds zwischen Palette und Boden ist eine Türschwelle um eine Schwenkachse am Boden verschwenkbar gelagert. Die Türschwelle wird indirekt aufgrund eines Ausschiebens der Palette und deren spezieller Form abgesenkt.

In der FR-A-22 93 334 wird eine Laderampe für einen Lastkraftwagen offenbart. Die Laderampe wird durch ein hinteres Karosseriebauteil gebildet. Dieses weist eine hohle Ladefläche auf, in der ein Boden verschieblich gelagert ist. Dieser weist keine geschlossene Oberfläche auf, sondern ist in Form eines Gitters ausgebildet. Unterhalb des hinteren Karosseriebauteils sind dessen Maximalneigung bestimmende Rahmenteile angeordnet.

Der vorliegenden Erfindung liegt die Aufgabe zugrunde, eine Zutrittsvorrichtung für Kraftfahrzeuge zu schaffen, die konstruktiv einfach mit geringer Bauhöhe ausgeführt ist und von einem Rollstuhlfahrer einfach und zusätzliche Hilfe benutzt werden kann, wobei keine wesentlichen Änderungen am Grundfahrzeug vorausgesetzt werden.

Diese Aufgabe wird erfindungsgemäß durch den Gegenstand des Anspruches 1 gelöst.

Die erfindungsgemäße Lösung stellt eine Auffahrtsrampe zur Verfügung, die einen so geringen Steigungswinkel aufweist, daß ein Rollstuhlfahrer sie ohne fremde Hilfe bewältigen kann. Dennoch kann die erfindungsgemäße Zustiegsvorrichtung mit konstruktiv einfachen Mitteln verwirklicht und problemlos am Fahrzeug angeordnet werden.

Während des Schwenkens der Rampe, d.h. während der Tätigkeit der Hubeinrichtung, befindet sich niemand auf der Rampe. Dies vereinfacht die Auslegung der Rampe selbst, da die Hubeinrichtung nur das Eigengewicht der Rampe bewegen muß. Weiterhin wird dadurch die Sicherheit wesentlich erhöht, da ein Verklemmen des Rollstuhls usw. während des Hubvorganges nicht möglich ist. Außerdem ist auch keine Rückrollsicherung nötig, die installiert werden muß, wenn eine horizontale Hubplattform verwendet wird.

Von weiterem Vorteil ist, daß die ausgefahrene Rampe problemlos auf die Straße oder auf den Gehsteig abgesenkt werden kann. Verspannungen zwischen Bus und Rampe können dabei nicht auftreten.

Weiterhin kann die erfindungsgemäße Zustiegsvorrichtung auch in Niederflurbussen verwendet werden, die eine zur Horizontalen geneigte Antrittsfläche haben.

Gemäß einer zu bevorzugenden Ausführungsform der Erfindung ist die Schwenkachse der ersten Plattform parallel zur Längsachse des Fahrzeuges angeordnet. Dadurch wird erreicht, daß die Rampe (bei linksgelenkten Fahrzeugen) nach rechts aus dem Fahrzeug ausgeschoben werden kann. Die Rampe kann somit ohne Probleme während des üblichen Ein- und Aussteigens von Fahrgästen betätigt werden, und ohne daß zusätzlich Platz z.B. hinter dem Fahrzeug benötigt wird. Weiterhin kann der Fahrer die Vorrichtung bei dieser Anordnung im Blick behalten und die Vorrichtung betätigen, ohne seinen Sitzplatz zu verlassen. Da Linienbusse üblicherweise an Gehsteigen anhalten, wird durch diese Gestaltung auch die vom Rollstuhlfahrer zu überwindende Höhe um die Gehsteighöhe vermindert.

Vorzugsweisese ist eine Klappe vorgesehen, die den Rampenkasten nach vorne abschließt und die gelenkig mit der oberen Platte der ersten Plattform verbunden ist. Dadurch wird die Klappe beim Ausschieben des Rampenausschubes automatisch angehoben. Des weiteren dient die Klappe zum Ausgleich der Höhendifferenz zwischen der ersten und der zweiten Plattform.

Die erste Plattform und das Fahrzeug sind vorzugsweise über mindestens zwei Schwenkbolzen miteinander verbunden, die die Schwenkachse bilden. Dabei kann die fahrzeugseitige Halteeinrichtung der Schwenkbolzen unmittelbar am Längsträger des Fahrzeuges befestigt werden. Dies hat den Vorteil, daß die Belastung der Rampe direkt vom Fahrzeuglängsträger aufgenommen wird und somit nicht zur Verformung geringer belastbarer Fahrzeugteile führt.

Die Zustiegsvorrichtung weist weiterhin vorzugsweise eine Verriegelungseinrichtung auf, mit der die beiden Plattformen gegeneinander und gegen das Fahrzeug verriegelt werden können. Die Verriegelungsvorrichtung kann auf unterschiedliche Weise aufgebildet sein. So können z.B. fahrzeugseitig Hubzylinder vorgesehen sein, deren Zylinderstangen in entsprechende Bohrungen im Rampenkasten der ersten Plattform eingreifen. Vorzugsweise ist jedoch ein doppeltwirkender Hubzylinder vorgesehen, der an beiden Enden je eine Zylinderstange aufweist, die sowohl Rahmenseitenteile der zweiten Plattform, als auch Rahmenseitenteile der ersten Plattform durchdringen und in entsprechende fahrzeugfeste Halteelemente eingreifen. Durch diesen Verriegelungsmechanismus wird ein absolut sicherer Halt der beiden Plattformen gegeneinander und der Plattformen zum Fahrzeug sichergestellt. Dadurch wird z.B. ein Klappern der Plattformen bei der Bewegung des Fahrzeuges vermieden.

Die Anordnung des Verriegelungszylinders innerhalb des Rampenkastens hat den Vorteil, daß der gesamte Rampenkasten als Einheit ein- und ausgebaut werden kann. Es brauchen lediglich flexible Schläuche des Verriegelungszylinders mit der Druckluftversorgung des Fahrzeuges verbunden zu werden, um eine Betätigung der Rampe herzustellen.
Das Absenken und Anheben der Plattformen geschieht vorzugsweise mit einem elektrisch angetriebenen Spindelantrieb. Ein solcher Spindelantrieb hat gegenüber einer Druckluftbetätigung den Vorteil, daß die Verbindung zwischen Fahrzeug und Plattform weitgehend starr erfolgt, wodurch Beschleunigungsstöße während der Betätigung der Hubeinrichtung ausgeschlossen sind.

Die Konstruktion der erfindungsgemäßen Zustiegsvorrichtung macht es möglich, die Rampe zwischen zwei Querholmen des Fahrzeugrahmens anzuordnen. Diese Querholme können dann unmittelbar die Verriegelungselemente aufnehmen.

Das Ausfahren der zweiten Plattform gegenüber der ersten Plattform geschieht vorzugsweise über einen doppeltwirkenden pneumatischen Zylinder oder ebenfalls über einen elektrisch betätigten Spindelantrieb. Diese Gestaltung hat den Vorteil, daß das Ausfahren und Absenken der Zustiegsvorrichtung vollkommen automatisch durchgeführt werden kann.

Neben dieser bisher beschriebenen Zustiegsvorrichtung und deren vorteilhaften Weiterbildungen wird ein weiteres Ausführungsbeispiel dargestellt. Die folgende Zustiegsvorrichtung zeichnet sich insbesondere durch eine flexible Einbaulage ihres Antriebes aus, wobei außerdem im direkten Spritzwasserbereich nur unempfindliche Bauteile angeordnet sind.

Bei dieser anderen vorteilhaften Ausführungsform der Zustiegsvorrichtung ist an mindestens einem Rahmenteil wenigstens ein vom Rampenkasten seitlich abstehender, mit einer zum Verschwenken des Rampenkasten ausgebildeten Schwenkeinrichtung in Verbindung stehender Haltevorsprung angeordnet. Der Rampenkasten entspricht dabei in seiner Form dem zuvor beschriebenen Rampenkasten.

Ähnlich einer Zugbrücke ist so eine konstruktiv einfach ausgeführte, von einem Rollstuhlfahrer ohne zusätzliche Hilfe befahrbare Rampe gebildet. Mit Hilfe der Schwenkeinrichtung ist die Rampe durch die parallel zur Längsachse des Fahrzeuges angeordnete Schwenkachse zwischen der im wesentlichen horizontalen Ruheposition und einer in vertikaler Richtung an einem Ende abgesenkten Position verschwenkbar. Durch die Ausbildung mindestens eines seitlichen Haltevorsprungs werden außerdem die die Rampe benutzenden Rollstuhlfahrer in ihrer Bewegungsfreiheit nicht behindert und ein Befahren der Rampe ist leicht möglich.

In diesem Zusammenhang erweist es sich als günstig, wenn die Haltevorsprünge symmetrisch beidseitig zum Rampenkasten ausgebildet sind. Auf diese Weise ist bei auch symmetrisch ausgerichteter Schwenkeinrichtung ein Anheben und Absenken der Rampe in konstruktiv einfacher Weise möglich. Ein Verkippen der Plattform oder eine besonders stabile Lagerung um ein Verkippen zu verhindern, sind in diesem Fall nicht nötig.

Um den Rampenkasten beim Anheben und Absenken in seiner gesamten Breite zu unterstützen und mechanisch besonders stabil auszuführen, ist es von Vorteil, wenn die Enden einer unterhalb des Rampenkasten im wesentlichen in Längsrichtung des Omnibusses verlaufenden, den Rampenkasten seitlich überragenden Traverse als Haltevorsprünge ausgebildet sind.

Um eine gute Verbindung zwischen Traverse und Rampenkasten zu erreichen, ohne die Beweglichkeit des Rampenausschubs zu beeinträchtigen, ist es günstig, wenn die Traverse zumindest teilweise im Rampenkasten versenkt ist. Durch den Formschluß von Rampenkasten und Traverse ist auf diese Weise ein Verrutschen der Traverse relativ zum Rampenkasten fast ohne zusätzliche Befestigungsmaßnahme ausgeschlossen. Es ist völlig ausreichend, die Traverse nur mit wenigen Schrauben zusätzlich am Rampenkasten zu befestigen. Ein Austausch der Traverse im Falle einer eventuellen Beschädigung oder zur Anpassung an andere vorgegebene Schwenkeinrichtungen ist unter Verwendung der gleichen Rampe leicht möglich.

Um die Einbaumöglichkeiten noch variabler zu gestalten, ist es in diesem Zusammenhang auch günstig, wenn die Schwenkeinrichtung zumindest einen mit wenigsten einem Haltevorsprung über eine flexible Verbindung verbundenen Hubantrieb aufweist. Es ist natürlich ebenso möglich, an jedem Haltevorsprung eine solche Schwenkeinrichtung anzuschließen. Mit Hilfe der flexible Verbindungen ist die Einbaulage sehr variabel wählbar.

Dabei erweist es sich als zusätzlich von Vorteil, wenn zwischen Haltevorsprung und Hubantrieb zur Führung der flexiblen Verbindung mindestens eine Umlenkrolle angeordnet ist. So ist es möglich, die Hubantriebe gegebenenfalls durch mehrfaches Umlenken der flexiblen Verbindung an für den Einbau besonders günstigen Stellen unterzubringen. Die Hubantriebe müssen dabei nicht in unmittelbarer Nachbarschaft der Rampe angeordnet sein.

In diesem Zusammenhang ist es weiterhin, günstig, wenn zur Spannung der flexiblen Verbindung mit dieser eine Spanneinrichtung verbunden ist. Ein Abrutschen der Verbindung, z. B. von den Umlenkrollen, läßt sich so in einfachster Weise verhindern. Außerdem kann über ein elektrisches Signal eine gegebenenfalls nachlassende Kettenspannung an der Spanneinrichtung gemeldet werden und dieses Signal zur Rampensteuerung verwendet werden.

Falls der Rampenausschub bein einer Benutzung nicht fest aufliegt, sondern z. B. in einer gewissen Höhe über dem Erdboden freischwebend hängt, erweist es sich als Vorteil, wenn zur Vermeidung von Schwingungen Dämpfungselemente mit einem oberen mechanischen Anschlag an der Rampe angeordnet sind. Diese halten die Rampe in der Grundstellung und zusätzlich die Kette auf Spannung. Sie ermöglichen aber auch eine Bewegung der Rampe über ihr oberes Niveau. Wird die Rampe z. B. durch äußere Einflüsse nach oben gedrückt, denkbar beim kneeling, kann sie nach oben ausweichen und ist vor Beschädigung geschützt.

Bei einer vorteilhaften Ausführungsform ist das Dämpfungselement als Stoßdämpfer ausgebildet und am Haltevorsprung angeordnet. Dadurch ist ohne Beeinträchtigung der Rollstuhlfahrer mit konventionellen Mitteln eine Dämpfung herstellbar. Außerdem ist bei selbsthemmenden Hubantrieben, bei denen z. B. eine Verriegelung der Rampe in ihrer Ruheposition entfällt, in Zusammenwirkung mit den Dämpfungselementen während des gesamten Betriebes der Rampe eine sichere Benutzung gewährleistet. Ein zufälliges Verschwenken der Rampe nach oben wird durch die Stoßdämpfer und ein Verschwenken nach unten durch die Selbsthemmung der Hubantriebe verhindert.

Die Betätigung der Rampe mit Hilfe der Schwenkeinrichtung erfolgt im Regelfall automatisch. Der Fahrer des Omnibusses wird bei Bedarf den Rampenkasten absenken, den Rampenausschub ausfahren und entsprechend nach Benutzung die Rampe in die Ruheposition zurückstellen. Im Falle einer Fehlfunktion ist die Rampe durch eine manuelle Notbetätigung weiterhin verwendbar.

Weitere Vorteile, Merkmale und Anwendungsmöglichkeiten der vorliegenden Erfindung ergeben sich aus der nachfolgenden Beschreibung eines Ausführungsbeispieles im Zusammenhang mit der Zeichnung. Darin zeigen:
- Fig. 1: eine Seitenansicht der erfindungsgemäßen Zutrittsvorrichtung in eingefahrenem Zustand;
- Fig. 2: eine Seitenansicht der erfindungsgemäßen Zutrittsvorrichtung im ausgefahrenen Zustand;
- Fig. 3: eine Vorderansicht der erfindungsgemäßen Zutrittsvorrichtung;
- Fig. 4: eine teilweise geschnittene Aufsicht auf die Vorrichtung.
- Fig. 5: in schräger Aufsicht eine weitere Ausführungsform der erfindungsgemäßen Zutrittsvorrichtung.

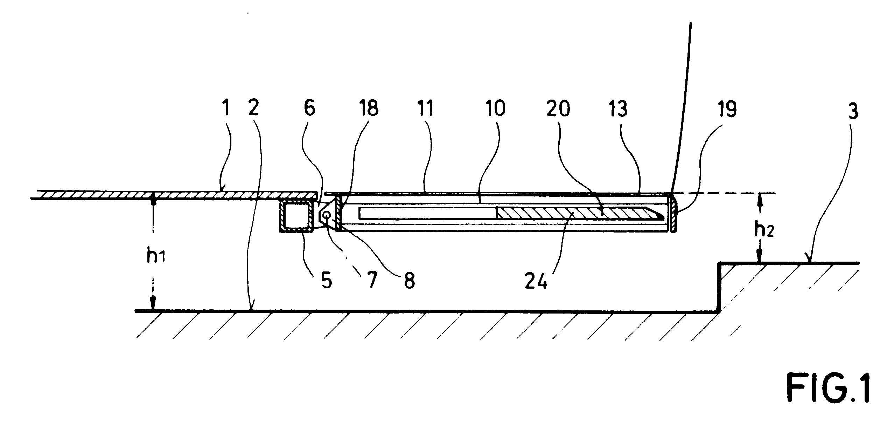

Fig. 1 zeigt in schematisierter Darstellung den Laufgang 1 eines Niederflur-Omnibusses, der durch (nicht dargestellte) Achsen und Räder mit seiner Oberfläche im Abstand h₁ von einer Fahrbahn 2 gehalten ist. Die Fahrbahn ist rechts von einem erhöhten Gehsteig 3 begrenzt, wodurch sich ein Abstand der Laufgangoberfläche gegenüber der Gehsteigoberfläche von h₂ ergibt. Die in Fig. 1 dargestellte Situation ist somit typisch für einen Nahverkehrsbus, der am Gehsteigrand anhält, um Fahrgäste ein- und aussteigen zu lassen.

Der Laufgang 1 ist durch einen Längsträger 5 abgestützt, der sich entlang des gesamten Fahrzeuges erstreckt. An dem Längsträger 5 sind zwei Haltewangen 6 angeschraubt, die eine Bohrung zur Aufnahme eines Bolzens 7 aufweisen. Über die dadurch geschaffene gelenkige Verbindung ist der Tragrahmen 10 der ausfahrbaren Rampe, die in ihrer Gesamtheit mit 11 bezeichnet ist, mit dem Fahrzeug verbunden.

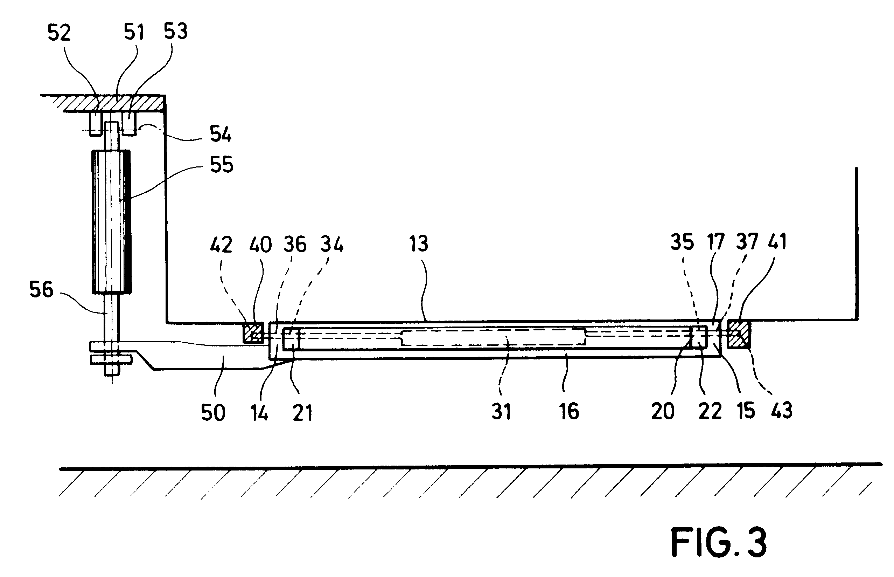

Der Rahmen besteht, wie insbesondere aus Fig. 3 zu erkennen ist, aus einer horizontal angeordneten Platte 13, aus einer vertikal angeordneten linken (in Fig. 3) Seitenwange 14, einer ebenfalls vertikal angeordneten (rechten) Seitenwange 15 und einer unteren Platte 16. Die obere Platte 13 bildet gleichzeitig den Antritt des Fahrzeuges und ist entsprechend, z.B. mit einem Gummibelag (nicht dargestellt), belegt. Der Rahmen, bestehend aus den Platten 13, 16 und den Seitenwangen 14, 15, stellt insgesamt die absenkbare Rampe 17 dar, und wird als Rampenkasten bezeichnet.

Der Rampenkasten ist nach hinten, d.h. zur Fahrzeugmitte hin, durch eine Platte 18 verschlossen, die im Winkel von 90° zu den Seitenwangen 14, 15 angeordnet ist und diese miteinander verbindet. Im vorderen Bereich des Rampenkastens ist an der oberen Platte 11 eine Klappe 19 befestigt, die gelenkig mit der oberen Platte verbunden ist.

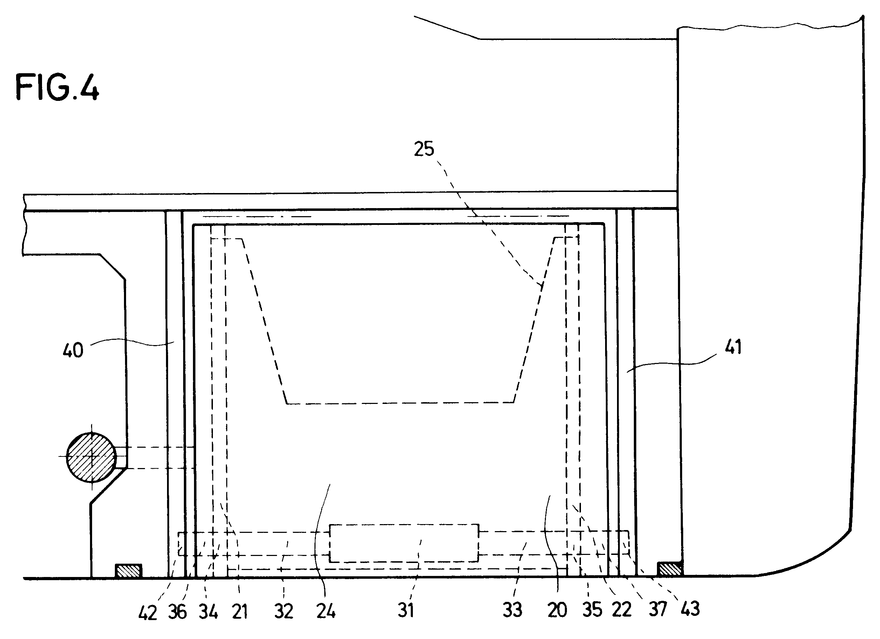

In dem von dem Rahmenteilen 13, 14, 15, 16 begrenzten Raum ist der Rampenausschub 20 angeordnet. Der Rampenausschub 20 weist zwei quer zur Fahrtrichtung des Fahrzeuges angeordnete Rahmenteile 21, 22 auf, auf deren eine Platte 24 angeordnet ist. Im hinteren Teil der Platte 24 befindet sich, wie in Fig. 4 zu erkennen ist, ein trapezförmiger Ausschnitt 25, der aus Gründen der Materialersparnis und der Gewichtsreduzierung vorgesehen ist.

Zwischen den Rahmenteilen 20, 21 des Rampenausschubes 20 ist eine Verriegelungseinrichtung 30 angeordnet. Die Verriegelungseinrichtung 30 besteht beim gezeigten Ausführungsbeispiel aus einem pneumatischen Zylinder 31, dessen Kolbenstangen 32, 33 zu beiden Seiten des Zylinders, d.h. in Fahrtrichtung und entgegengesetzt zur Fahrtrichtung austreten. Die Kolbenstangen durchdringen Bohrungen 34, 35 in den Rahmenteilen des Rampenausschubes, Bohrungen 36, 37 in den Seitenwangen des Rampenkastens und dringen in Bohrungen 42, 43 in zwei Querholmen 40, 41 ein, die fest mit dem Fahrzeug verbunden sind. Die Querholme sind vorzugsweise Teil des Fahrzeugrahmens selbst.

Der Rampenkasten weist weiterhin einen Tragarm 50 auf, der mit der Unterseite des Rampenkastens verschweißt ist und sich parallel zur Fahrzeuglängsachse entgegengesetzt zur Fahrtrichtung vom Rampenkasten aus erstreckt. An einer höher gelegenen Fläche des Fahrzeuges, im vorliegenden Fall eine zur Überbrückung des Radkastens erhöhte Sitzaufstandsfläche 51, sind Befestigungswangen 52, 53 angeordnet. In diesen Befestigungswangen ist über einen nicht dargestellten Bolzen, der sich entlang der schematisch dargestellten Achse 54 erstreckt, eine Hubeinheit 55 angeordnet. Die Hubeinheit 55 hat eine ausfahrbare Spindel 56, die mit dem Tragarm 50 verbunden ist.

Die Hubeinheit 55 wird elektrisch über einen Spindelantrieb betätigt. Der Zylinder 31 ist, was in den Figuren aus Gründen der Vereinfachung nicht dargestellt wurde, über flexible Schläuche und entsprechende Ventile mit der Druckluftversorgung des Fahrzeuges verbunden.

Die Funktion der Vorrichtung ist nun wie folgt:
Während der Fahrt des Fahrzeuges befindet sich der Rampenausschub im Rampenkasten und ist mit dem Rampenkasten und dem Fahrzeug durch die Zylinderstange 32, 33 verriegelt. Dadurch sind zwei Befestigungspunkte gebildet. Die beiden anderen Befestigungspunkte werden durch die rückwärtigen Gelenke gebildet, so daß der Rampenkasten insgesamt klapperfrei im Fahrzeug gehalten ist.

Wenn der Fahrer, z.B. beim Erreichen einer Haltestelle, feststellt, daß ein Rollstuhlfahrer zusteigen oder aussteigen will, betätigt er einen Schalter, mit dem das Ausfahren der Rampe gestartet wird. Der Rampenausschub wird durch einen nicht dargestellten Spindelantrieb aus dem Rampenkasten herausgefahren, wie dies im Bild 2 der Fall ist. Dabei entspricht die Ausfahrstrecke in etwa dem nicht eingeschnittenen Bereich der Platte 24. Beim Ausfahren des Rampenausschubes schiebt sich die bewegliche Klappe 19 selbsttätig nach oben.

Sobald der Rampenausschub voll ausgefahren ist, wird die Hubeinheit 55 betätigt. Der Rampenkasten senkt sich dann insgesamt ab, bis der Rampenausschub auf der Straße oder, wie in Fig. 1 dargestellt, auf dem Gehsteig aufliegt. Anschließend kann der Rollstuhlfahrer über den Rampenausschub, die Klappe und den oberen Teil des Rampenkastens in das Fahrzeug fahren. Dabei bildet die bewegliche Klappe einen Übergang zwischen dem Rampenausschub und der Platte 11.

Aufgrund der Länge der gesamten Vorrichtung ergibt sich ein geringer Neigungswinkel, so daß der Rollstuhlfahrer den Höhenunterschied ohne Probleme bewältigen kann.

Nach Beendigung des Einstiegsvorganges wird das Einfahren der Rampe eingeleitet, und der Rampenkasten wird durch die Hubeinkeit 55 angehoben und der Rampenausschub gleitet in den Rampenkasten zurück. Dabei verschließt die Klappe den Rampenkasten automatisch. Die Zylinderstangen 32, 33 werden wieder in ihre Halteposition gefahren und halten den Rampenkasten wieder in ebener Ausrichtung mit dem Laufgang des Busses fest.

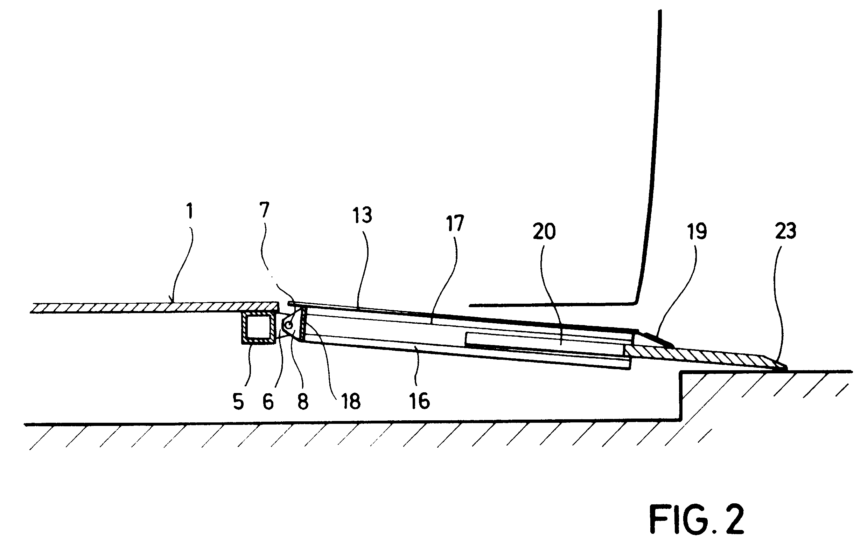

Teile, die Teilen aus Fig. 1 - 4 entsprechen, weisen im folgenden die gleichen Bezugsziffern auf. Es wird hauptsächlich nur noch auf neue Merkmale eingegangen und im übrigen auf die Beschreibung der anderen Figuren verwiesen.

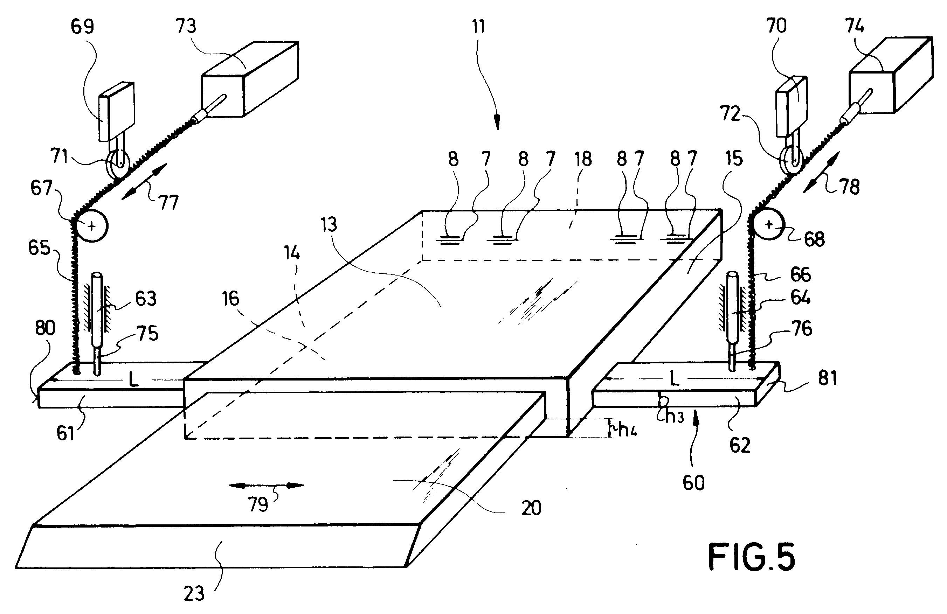

Fig. 5 zeigt einen im wesentlichen rechteckigen Rampenkasten 11, der durch obere Platte 13, untere Platte 16, Seitenwangen 14 und 15 sowie Rückwand 18 gebildet ist. In der Rückwand 18 ist der Rampenkasten 11 mit Bolzen 7 durch Haltewangen 8 schwenkbar verbunden und am Fahrzeug gelagert. Der Rampenausschub 20 ist im wesentlichen vollständig aus dem Rampenkasten 11 an seiner Vorderseite ausgefahren. Über die Auffahrschräge 23 an freien Ende des Rampenasschubes 20 ist dieser sowie der Rampenkasten 11 für einen Rollstuhlfahrer zugänglich.

Unterhalb des Rampenkastens 11 verläuft eine Traverse 60, die den Rampenkasten seitlich durch Haltevorsprünge 61 und 62 überragt. Die Traverse 60 verläuft im wesentlichen senkrecht zu den Seitenwangen 14 und 15. Die hervorstehenden Haltevorsprünge 61 und 62 weisen bei diesem Ausführungsbeispiel die gleiche Länge L auf. Außerdem verläuft die Traverse 60 parallel zur Fahrzeuglängsrichtung 79. In den Seitenwangen 14 und 15 ist die Traverse 60 versenkt und verläuft formschlüssig mit der unteren Platte 16. Die Höhe h₃ der Traverse 60 ist dabei kleiner als die Höhe h₄ in der der Rampenausschub 20 mit seiner Unterkante im Rampenkasten 11 verläuft.

In der Nähe der vom Rampenkasten 11 abgewandten Enden 80 und 81 der Traverse 60 sind flexible Verbindungen 65 und 66, wie z. b. Ketten mit den Haltevorsprüngen 61 und 62 verbunden. In einem ersten Bereich sind die Ketten 65 und 66 senkrecht zu den Haltevorsprüngen 61 bzw. 62 angeordnet und verlaufen in vertikaler Richtung. Mit Hilfe von Umlenkrollen 67 und 68 sind die Ketten in ihrem weiteren Verlauf in eine horizontale Richtung umgelenkt.

Mit Hilfe von Hubantrieben 73 und 74, die an den den Haltevorsprüngen 61 und 62 entgegengesetzten Enden der Ketten 65 und 66 angeordnet sind, sind diese in Richtungen 77 und 78 bewegbar. Bei Betätigung dieser Hubantriebe, die z. B. als Spindelhubwerke ausgebildet sein können, ist die Rampe um die Bolzen 7 verschwenkbar.

Zwischen Umlenkrollen 67 und 68 und Hubantrieben 73 und 74 sind zur Spannung der Ketten 65 und 66 Spanneinrichtungen 69 und 70 angeordnet. Mit Hilfe von Niederhaltern 71 und 72 sind die Ketten 65 und 66 durch die Spanneinrichtungen 69 und 70 vorgespannt.

Im wesentlichen parallel zum vertikalen Bereich der Ketten 65 und 66 sind an den Haltevorsprüngen 61 und 62 in unmittelbarer Nähe zu den Ketten Stoßdämpfer 63 und 64 angeordnet. Diese sind zur Dämpfung der vertikalen Bewegung der Rampe mit Hilfe von Stempeln 75 und 76 an den Haltevorsprüngen 61 und 62 angeordnet.

Die Funktion der Vorrichtung ist analog der entsprechend der Fig. 1 - 4 beschriebenen Funktion. Nur ist in diesem Fall die Rampe mit Hilfe der aus Hubantrieben und flexiblen Verbindungen bestehenden Schwenkeinrichtung verschwenkbar. Durch die Selbsthemmung der Hubantriebe in Zusammenwirkung mit den Stoßdämpfern kann auf eine Verriegelung der Rampe in ihrer Ruheposition sowie in anderen Positionen verzichtet werden. Außerdem wird damit ein eventuelles Schwanken der Rampe bei Befahren mit einem Rollstuhl gedämpft.

## Patentansprüche

1. Zustiegsvorrichtung für Rollstuhlfahrer zum Einbau in Kraftfahrzeuge, insbesondere für Niederflur-Omnibusse, mit einer ersten Plattform (13), welche mit einer Hubeinrichtung (55) von einer ersten Stellung, in der sie im wesentlichen eben mit dem Laufgang (1) des Fahrzeuges abschließt, in eine zweite Stellung überführbar ist, wobei unter dieser ersten Plattform (13) eine zweite Plattform (20) verschieblich angeordnet ist und um eine vorbestimmte Strecke unter der ersten Plattform nach vorne, d.h. vom Fahrzeuginneren weg herausgefahren werden kann, **dadurch gekennzeichnet,** daß an dem rückwärtigen, dem Fahrzeuginneren zugewandten Endbereich der ersten Plattform (13) mindestens eine horizontale Schwenkachse (7) vorgesehen ist, durch die die erste Plattform schwenkbar mit dem Fahrzeug verbunden werden kann, und daß die Hubeinrichtung (55) derart mit der ersten Plattform verbunden ist, daß die erste (13) und zweite (20) Plattform gemeinsam unter Bildung einer Auffahrtsrampe absenkbar sind, wobei die erste Plattform einen Rampenkasten bildet, der einen flachen, ebenen Hohlraum umschließt, in dem die zweite Plattform (20) aufnehmbar ist.

2. Vorrichtung gemäß Anspruch 1, **dadurch gekennzeichnet,** daß die horizontale Schwenkachse (7) parallel zur Längsachse des Fahrzeuges angeordnet werden kann.

3. Vorrichtung gemäß Anspruch 1 oder 2, **dadurch gekennzeichnet,** daß der Rampenkasten zwei in Verschieberichtung der zweiten Plattform angeordnete Rahmenteile (14, 15) aufweist, die nach oben durch eine obere Platte (13) und nach unten durch eine untere Platte (16) und im rückwärtigen, der Einstiegsrichtung abgewandten Bereich mit einer Abdeckplatte (18) abgedeckt sind.

4. Vorrichtung gemäß einem der Ansprüche 1-3, **dadurch gekennzeichnet,** daß im vorderen, dem Einstieg zugewandten Bereich des Rampenkastens eine parallel zur Schwenkachse angeordnete Klappe (19) vorgesehen ist, welche gelenkig mit der oberen Platte (13) des Rampenkastens verbunden ist und den zwischen oberer und unterer Platte gebildeten Hohlraum nach vorne abschließt.

5. Vorrichtung gemäß mindestens einem der Ansprüche 1 bis 4, **dadurch gekennzeichnet,** daß im rückwärtigen Bereich des Rampenkastens mindestens zwei im Abstand zueinander angeordnete Haltevorsprünge (8) mit dem Rampenkasten fest verbunden sind, die eine Öffnung aufweisen, in dem ein Schwenkbolzen (7) angeordnet ist, durch den der Rampenkasten schwenkbar mit dem Fahrzeug verbunden ist.

6. Vorrichtung gemäß Anspruch 5, **dadurch gekennzeichnet,** daß komplementär zu den Haltevorsprüngen (8) an einem Tragelement (5) Haltevorsprünge (6) vorgesehen sind, die die Schwenkbolzen (7) aufnehmen.

7. Vorrichtung gemäß mindestens einem der Ansprüche 1 bis 6, **dadurch gekennzeichnet,** daß eine Verriegelungseinrichtung (30) vorgesehen ist, die die erste und zweite Plattform in der ersten Stellung in bezug auf das Fahrzeug verriegeln.

8. Vorrichtung gemäß Anspruch 7, **dadurch gekennzeichnet,** daß die Verriegelungseinrichtung als doppeltwirkender, elektrisch oder pneumatisch betätigter Zylinder ausgebildet ist, welcher zwei Zylinderstangen aufweist, die im ausgefahrenen Zustand die Verriegelung der ersten und zweiten Plattform gegenüber dem Fahrzeug bewirken.

9. Vorrichtung gemäß Anspruch 8, **dadurch gekennzeichnet,** daß der Verriegelungszylinder im wesentlichen symmetrisch in bezug zur zweiten Plattform (20) angeordnet und mit dieser verbunden ist und daß die Seitenwangen der ersten Plattform Bohrungen aufweisen, durch die die Zylinderstangen dieses Verriegelungszylinders durchdringen, um in fahrzeugfeste Verriegelungsbohrungen eingeschoben zu werden.

10. Vorrichtung gemäß mindestens einem der Ansprüche 1 bis 9, **dadurch gekennzeichnet,** daß die zweite Plattform zwei im Abstand zueinander angeordnete Rahmenteile aufweist, welche quer zur Schwenkachse der ersten Plattform angeordnet sind und auf denen eine Platte (24) befestigt ist.

11. Vorrichtung gemäß mindestens einem der Ansprüche 7 bis 10, **dadurch gekennzeichnet,** daß der Verriegelungszylinder parallel zur Schwenkachse der ersten Plattform zwischen den Rahmenteilen der zweiten Plattform befestigt ist.

12. Vorrichtung gemäß mindestens einem der Ansprüche 1 bis 11, **dadurch gekennzeichnet,** daß die Hubeinrichtung (55) einen Tragarm (50) aufweist, der unterhalb der ersten Plattform angeordnet und mit dieser verbunden ist.

13. Vorrichtung gemäß Anspruch 12, **dadurch gekennzeichnet,** daß die Hubeinrichtung zwischen dem Tragarm (50) und einer fahrzeugfesten Trageinrichtung angeordnet werden kann.

14. Vorrichtung gemäß Anspruch 13, **dadurch gekennzeichnet,** daß die Trageinrichtung zur Aufnahme der Hubeinrichtung (55) in einem Höhenniveau angeordnet werden kann, das oberhalb der Ebene des Laufganges des Fahrzeuges liegt.

15. Vorrichtung gemäß Anspruch 13 oder 14, **dadurch gekennzeichnet,** daß die Hubeinrichtung schwenkbar in bezug auf die Trageinrichtung und den Haltearm angeordnet ist.

16. Vorrichtung gemäß mindestens einem der Ansprüche 1 bis 15, **dadurch gekennzeichnet,** daß die Hubeinrichtung als elektrisch betätigte Hubspindel ausgebildet ist.

17. Vorrichtung gemäß einem der Ansprüche 1 - 6, **dadurch gekennzeichnet,** daß an mindestens einem Rahmenteil (14, 15) wenigstens ein vom Rampenkasten (11) seitlich abstehender, mit einer zum Verschwenken des Rampenkasten (11) ausgebildeten Schwenkeinrichtung (65, 67, 73; 66, 68, 74) in Verbindung stehender Haltevorsprung (61, 62) angeordnet ist.

18. Vorrichtung nach Anspruch 17, **dadurch gekennzeichnet,** daß die Haltevorsprünge (61, 62) symmetrisch beidseitig zum Rampenkasten(11) ausgebildet sind.

19. Vorrichtung nach einem der Ansprüche 17 oder 18, **dadurch gekennzeichnet,** daß die Enden (61, 62) einer unterhalb des Rampenkasten (11) in wesentlichen in Längsrichtung (79) des Omnibusses verlaufenden, den Rampenkasten (11) seitlich überragenden Traverse (60) als Haltevorsprünge ausgebildet sind.

20. Vorrichtung anch einem der Ansprüche 17 - 19, **dadurch gekennzeichnet,** daß die Traverse (60) zumindest teilweise im Rampenkasten (11) versenkt ist.

21. Vorrichtung nach einem der Ansprüche 17 - 20, **dadurch gekennzeichnet,** daß die Schwenkeinrichtung (65, 67, 73; 66, 68, 74) zumindest einen mit wenigstens einem Haltevorsprung (61, 62) über eine flexible Verbindung (65, 66) verbunden Hubantrieb (73, 74) aufweist.

22. Vorrichtung nach einem der Ansprüche 17 - 21, **dadurch gekennzeichnet,** daß zwischen Haltevorsprung (61, 62) und Hubantrieb (73, 74) zur Führung der flexiblen Verbindung (65, 66) mindestens eine Umlenkrolle (67, 68) angeordnet ist.

23. Vorrichtung nach einem der Ansprüche 17 - 22, **dadurch gekennzeichnet,** daß zur Spannung der flexiblen Verbindung (65, 66) mit dieser eine Spanneinrichtung (69, 70) verbunden ist.

24. Vorrichtung nach einem der Ansprüche 17 - 23, **dadurch gekennzeichnet,** daß zumindest ein Dämpfungselement (63, 64) zur Fixierung der Grundstellung der Rampe und Spannung der Kette (65, 66) am Rampenkasten (11) angeordnet ist.

25. Vorrichtung nach einem der Ansprüchen 17 - 24, **dadurch gekennzeichnet,** daß das Dämpfungselement als Stoßdämpfer (62, 75; 64, 76) ausgebildet ist und zwischen dem Grundrahmen des Fahrzeugs und dem Haltevorsprung (61, 62) angeordnet werden kann.

## Claims

1. Boarding device for wheelchair riders, for installation in motor vehicles, in particular for low-level buses, with a first platform (13) which can be transferred by a lifting device (55) from a first position, in which it is essentially level with the gangway (1) of the vehicle, to a second position, a second platform (20) being slidably arranged under the said first platform (13) and capable of being extended forwards (i.e. away from the interior of the vehicle) over a predetermined distance underneath the first platform, characterized in that at least one horizontal hinge (7) is provided in the rear end region (towards the interior of the vehicle) of the first platform (13), by which the first platform can be pivotably connected to the vehicle; and in that the lifting device (55) is connected to the first platform so that the first (13) and second (20) platforms can be lowered together to form an access ramp, with the first platform forming a ramp box enclosing a shallow fat space in which the second platform (20) can be accommodated.

2. Device according to Claim 1, characterized in that the horizontal hinge (7) can be arranged parallel with the longitudinal axis of the vehicle.

3. Device according to Claim 1 or 2, characterized in that the ramp box possesses two frame sections (14, 15) which are arranged in the sliding direction of the second platform and which are closed at the top by an upper plate (13) and at the bottom by a lower plate (16), and in the rear region (facing away from the direction of boarding) by a closure plate (18).

4. Device according to one of Claims 1 to 3, characterized in that a flap (19) is provided in the front region (towards the boarding point) of the ramp box, parallel with the hinge axis, hinged to the upper plate (13) of the ramp box, and closing, at the front, the space between upper and lower plates.

5. Device according to at least one of Claims 1 to 4, characterized in that at least two projecting brackets (8), spaced apart from one another, are fixed to the ramp box in the rear region thereof, and have holes in which hinge pins (7) are fitted for hinging the ramp box to the vehicle.

6. Device according to Claim 5, characterized in that projecting brackets (6), matching the projecting brackets (8), are provided on a support member (5), to receive the hinge pins (7).

7. Device according to at least one of Claims 1 to 6, characterized in that a locking device (30) is provided to secure the first and second platforms in the first position with respect to the vehicle.

8. Device according to Claim 7, characterized in that the locking device takes the form of a double-acting electrically or pneumatically operated cylinder possessing two cylinder rods which when extended lock the first and second platforms with respect to the vehicle.

9. Device according to Claim 8, characterized in that the locking cylinder is arranged essentially symmetrically with respect to the second platform (20) and is connected thereto and in that the side pieces of the first platform have holes through which the rods of the said locking cylinder pass, and are inserted in locking holes fixed to the vehicle.

10. Device according to at least one of Claims 1 to 9, characterized in that the second platform has two frame sections which are spaced apart and are arranged at right angles to the hinge axis of the first platform, and to which a plate (24) is fixed.

11. Device according to at least one of Claims 7 to 10, characterized in that the locking cylinder is mounted parallel with the hinge axis of the first platform between the frame sections of the second platform.

12. Device according to at least one of Claims 1 to 11, characterized in that the lifting device (55) has a support arm (50) arranged underneath the first platform and connected thereto.

13. Device according to Claim 12, characterized in that the lifting device can be arranged between the support arm (50) and a support device fixed to the vehicle.

14. Device according to Claim 13, characterized in that the support device to receive the lifting device (55) can be arranged at a level above the plane of the gangway of the vehicle.

15. Device according to Claim 13 or 14, characterized in that the lifting device is hinged with respect to the support device and the support arm.

16. Device according to at least one of Claims 1 to 15, characterized in that the lifting device takes the form of an electrically operated lifting screw.

17. Device according to one of Claims 1 to 6, characterized in that at least one projecting bracket (61, 62) is arranged on at least one frame section (14, 15), projecting laterally from the ramp box (11), and connected to a tilting device (65, 67, 73; 66, 68, 74) for tilting the ramp box (11).

18. Device according to Claim 17, characterized in that the projecting brackets (61, 62) are formed symmetrically on either side of the ramp box (11).

19. Device according to one of Claims 17 or 18, characterized in that the ends (61, 62) of a cross member (60) extending underneath the ramp box (11) essentially in the longitudinal direction (79) of the bus and projecting laterally from the ramp box (11) are formed as projecting brackets.

20. Device according to one of Claims 17 to 19, characterized in that the cross member (60) is at least partly encased in the ramp box (11).

21. Device according to one of Claims 17 to 20, characterized in that the tilting device (65, 67, 73; 66, 68, 74) has at least one actuating mechanism (73, 74) connected by a flexible connection (65, 66) to at least one projecting bracket (61, 62).

22. Device according to one of Claims 17 to 21, characterized in that at least one deflection pulley (67, 68) is arranged between the projecting bracket (61, 62) and the actuating mechanism (73, 74) to guide the flexible connection (65, 66).

23. Device according to one of Claims 17 to 22, characterized in that a tensioning device (69, 70) is connected to the flexible connection (65, 66), to tension it.

24. Device according to one of Claims 17 to 23, characterized in that at least one damping element (63, 64) is arranged on the ramp box (11) to establish the basic position of the ramp and tension of the chain (65, 66).

25. Device according to one of Claims 17 to 24, characterized in that the damping element takes the form of a dash pot (62, 75; 64, 76), and can be arranged between the chassis of the vehicle and the projecting bracket (61, 62).

## Revendications

1. Dispositif d'accès destiné aux usagers de fauteuils roulants et prévu pour être monté dans des véhicules automobiles, en particulier des autobus à plate-forme surbaissée, comprenant une première plate-forme (13) qui, au moyen d'un dispositif de levage (55), peut être amenée d'une première position dans laquelle elle se raccorde sensiblement à plat avec le couloir (1) du véhicule, dans une seconde position, une seconde plate-forme (20) étant disposée de manière mobile sous ladite première plate-forme (13) et pouvant être avancée d'une certaine distance sous la première plate-forme, c'est-à-dire sortie de l'intérieur du véhicule, **caractérisé en ce** que sur la section terminale postérieure de la première plate-forme (13) tournée vers l'intérieur du véhicule est prévu au moins un axe de pivotement (7) horizontal par lequel la première plate-forme peut être couplée de manière pivotante avec le véhicule, et que le dispositif de levage (55) est couplé avec la première plate-forme de telle façon que la première plate-forme (13) et la seconde plate-forme (20) peuvent être abaissées ensemble en formant une rampe de sortie, la première plate-forme constituant une boîte de rampe laquelle enveloppe une cavité plate et plane dans laquelle peut être logée la seconde plate-forme (20).

2. Dispositif selon la revendication 1, caractérisé en ce que l'axe de pivotement (7) horizontal peut être orienté parallèlement à l'axe longitudinal du véhicule.

3. Dispositif selon l'une des revendications 1 ou 2, caractérisé an ce que la boîte de rampe comprend deux éléments de cadre (14, 15) orientés dans la direction de déplacement de la seconde plate-forme, lesquels sont recouverts vers le haut par une plaque supérieure (13), vers le bas, par une plaque inférieure (16) et dans la partie postérieure opposée à la direction d'accès, par une plaque de recouvrement (18).

4. Dispositif selon l'une des revendications 1 á 3, caractérisé en ce que dans la partie antérieure de la boîte de rampe tournée vers l'entrée est prévu un volet (19) disposé parallèlement à l'axe de pivotement, qui est articulé sur la plaque supérieure (13) de la boîte de rampe et ferme l'avant de la cavité formée entre les plaques supérieure et inférieure.

5. Dispositif selon l'une quelconque des revendications 1 à 4, caractérisé en ce que dans la partie postérieure de la boîte de rampe, au moins deux saillies de retenue (8) situées à distance l'une par rapport à l'autre sont solidarisées avec la boîte de rampe et pourvues d'une ouverture dans laquelle est logé un axe de pivotement (7) par lequel ladite boîte de rampe est raccordée au véhicule.

6. Dispositif selon la revendication 5, caractérisé en ce qu'il comprend, sur un élément de support (5) des saillies de retenue (6) complémentaires des saillies de retenue (8), qui reçoivent les axes de pivotement (7).

7. Dispositif selon l'une quelconque des revendications 1 à 6, caractérisé en ce qu'il comprend un dispositif de verrouillage (30) qui bloque les première et seconde plates-formes dans la première position par rapport au véhicule.

8. Dispositif selon la revendication 7, caractérisé en ce que le dispositif de verrouillage est conformé en vérin à double effet à commande électrique ou pneumatique muni de deux tiges de cylindre qui, à l'état sorti, assurent le verrouillage des première et seconde plates-formes par rapport au véhicule.

9. Dispositif selon la revendication 8, caractérisé en ce que le cylindre de verrouillage est disposé de manière sensiblement symétrique par rapport à la seconde plate-forme (20) et couplé avec celle-ci, et que les faces latérales de la première plate-forme présentent des alésages par lesquels passent les tiges de cylindre dudit cylindre de verrouillage pour s'engager dans des alésages de verrouillage du véhicule.

10. Dispositif selon l'une quelconque des revendications 1 à 9, caractérisé en ce que la seconde plate-forme comprend deux éléments de cadre qui sont disposés à distance l'un de l'autre et orientés transversalement par rapport à l'axe de pivotement de la première plate-forme et sur lesquels est fixée une plaque (24).

11. Dispositif selon l'une quelconque des revendications 7 à 10, caractérisé en ce que le cylindre de verrouillage est fixé parallèlement à l'axe de pivotement de la première plate-forme, entre les éléments de cadre de la seconde plate-forme.

12. Dispositif selon l'une quelconque des revendications 1 à 11, caractérisé en ce que le dispositif de levage (55) comprend un bras de support (50) lequel est disposé en dessous de la première plate-forme et couplé avec celle-ci.

13. Dispositif selon la revendication 12, caractérisé en ce que le dispositif de levage peut être monté entre le bras de support (50) et un dispositif de support solidaire du véhicule.

14. Dispositif selon la revendication 13, caractérisé en ce que le dispositif de support pour la réception du dispositif de levage (55) peut être prévu à un niveau au-dessus du plan du couloir du véhicule.

15. Dispositif selon l'une des revendications 13 ou 14, caractérisé en ce que le dispositif de levage est monté de manière à pouvoir pivoter par rapport au dispositif de support et au bras de support.

16. Dispositif selon l'une quelconque des revendications 1 à 15, caractérisé en ce que le dispositif de levage est conformé en broche de levage à commande électrique.

17. Dispositif selon l'une des revendications 1 à 6, caractérisé en ce que sur au moins un élément de cadre (14, 15) est prévue au moins une saillie de retenue (61, 62) qui dépasse latéralement de la boîte de rampe (11) et communique avec un dispositif de pivotement (65, 67, 73; 66, 68, 74) pour le pivotement de la boîte de rampe (11).

18. Dispositif selon la revendication 17, caractérisé en ce que les saillies de retenue (61, 62) sont conformées de manière symétrique de part et d'autre de la boîte de rampe (11).

19. Dispositif selon l'une des revendications 17 ou 18, caractérisé en ce que les extrémités (61, 62) d'une traverse (60) qui s'étend sous la boîte de rampe (11) sensiblement dans la direction longitudinale (79) de l'autobus, et dépasse latéralement de ladite boîte de rampe (11) sont conformées en saillies de retenue.

20. Dispositif selon l'une des revendications 17 à 19, caractérisé en ce que la traverse (60) est noyée au moins en partie dans la boîte de rampe (11).

21. Dispositif selon l'une des revendications 17 à 20, caractérisé en ce que le dispositif de pivotement (65, 67, 73; 66, 68, 74) comprend au moins une commande de levage (73, 74) couplée avec au moins une saillie de retenue (61, 62) par l'intermédiaire d'un raccord flexible (65, 66).

22. Dispositif selon l'une des revendications 17 à 21, caractérisé en ce qu'entre la saillie de retenue (61, 62) et la commande de levage (73, 74) est prévue au moins une poulie de renvoi (67, 68) pour le guidage du raccord flexible (65, 66).

23. Dispositif selon l'une des revendications 17 à 22, caractérisé en ce que, pour tendre le raccord flexible (65, 66), un dispositif tendeur (69, 70) est couplé avec celui-ci.

24. Dispositif selon l'une des revendications 17 à 23, caractérisé en ce qu'au moins un élément amortisseur (63, 64) est monté sur la boîte de rampe (11) pour fixer la position de base de la rampe et pour tendre la chaîne (65, 66).

25. Dispositif selon l'une des revendications 17 à 24, caractérisé en ce que l'élément amortisseur est conformé en absorbeur de chocs (62, 75; 64, 76) et peut être disposé entre le châssis de base du véhicule et la saillie de retenue (61, 62).
